# EUROPÄISCHE PATENTSCHRIFT

(11) **EP 1 640 193 B1**
(45) Veröffentlichungstag und Bekanntmachung des Hinweises auf die Patenterteilung: **25.02.2009**
(21) Anmeldenummer: 05106910.2
(22) Anmeldetag: 27.07.2005
(51) Int. Cl.: B60G 17/056

(54) **Verfahren zur Steuerung oder Überwachung von Radaufhängungskomponenten in Kraftfahrzeugen**
Method for controlling or monitoring suspension components of motor vehicles
Procédé pour la commande ou la surveillance de composants de la suspension de véhicules à moteur

(30) Priorität: 24.09.2004 DE 102004046671
(43) Veröffentlichungstag der Anmeldung: 29.03.2006
(73) Patentinhaber: Continental Aktiengesellschaft, 30165 Hannover (DE)
(72) Erfinder: Stiller, Alexander, 30823, Garbsen (DE)

(56) Entgegenhaltungen:
- DE-A1- 4 014 561
- DE-A1- 10 009 770
- US-A- 5 078 421
- US-A- 6 015 155
- PATENT ABSTRACTS OF JAPAN Bd. 1998, Nr. 01, 30. Januar 1998 (1998-01-30) & JP 09 240241 A (NISSAN MOTOR CO LTD), 16. September 1997 (1997-09-16)

## Beschreibung

Die Erfindung betrifft ein Verfahren zum Betreiben einer Steuerungseinrichtung eines Fahrzeuges oder eines Fahrzeugsystems, insbesondere einer Steuerungseinrichtung für Fahrwerkskomponenten, wobei die Steuerungseinrichtung im wesentlichen besteht aus mindestens einer Recheneinheit, aus mindestens einem zugehörigen Programmspeicher für die Algorithmen der Ablaufsteuerung, aus einem oder mehreren Datenspeichern zur Speicherung einstellbarer Parameter bzw. Parameterfelder für die Ablaufsteuerung, zur Speicherung von Signaldaten und Parametern von Sensoren, Sollwertgebern, sowie zur Speicherung von Signaldaten aus Datenleitungen (CAN), sowie aus zugehörigen Schnittstellen für Ein- und Ausgangssignale der Peripherie und der angesteuerten Bauelemente, wobei alle oder Teile der den Fahrzeugzustand repräsentierenden Zustandsgrößen in Form von Parametern oder Signaldaten als Speicherwerte in einem oder mehreren flüchtigen Speichern der Steuerungseinrichtung abgelegt werden.

Steuerungseinrichtungen für Fahrzeuge oder Fahrzeugsysteme - kurz Steuergeräte - , also etwa für solche Fahrwerksysteme oder -komponenten wie Niveauregelanlagen, benötigen und verfügen über Zustandsgrößen, die den Fahrzeugzustand repräsentieren, die über entsprechende Schnittstellen als Signal von zugehörigen Sensoren, Sollwertgebern oder Schaltern an das Steuergerät gesendet, dort als binäre Dateninformation abgespeichert und in der Rechnereinheit verarbeitet werden. Danach werden dann entsprechende Ausgangssignale - ggf. ebenfalls nach vorheriger Speicherung - an die Stellglieder im Fahrzeug gesendet. Die Verarbeitung in der Rechnereinheit kann dabei nach unterschiedlichen Arten erfolgen und schließt üblicherweise eine Vielzahl von Vergleichen, logischen Prüfungen, Rechenoperationen, Umwandlungen etc. ein.

Üblicherweise sind in Steuergeräten Regelfunktionen implementiert, mit denen z. B.eine meßbare Größe des Fahrzeuges mit einem Sollwert verglichen wird und mit Hilfe des Regelalgorithmus dann ein Aktuator angesteuert wird, und / oder es sind Steuerungsabfolgen implementiert, mit denen in unterschiedlichen Steuerzuständen unterschiedliche Ansteuervorgänge aktiviert werden. So ist der verwendete Begriff "Sollwert" also einerseits als Vorgabewert einer Regelfunktuion zu verstehen als auch als Vorgabenwert des Sollzustandes einer Steuerungsfunktion..

Diese Sollwerte entsprechen z. B. bei einer Niveauregelanlage einem vom Fahrer ausgewählten Höhenniveau, einem nach festgelegten Algorithmen automatisch eingestelltem Höhenniveau, oder auch einer Vorgabe von Niveauwerten über Diagnoseschnittstellen. So kann ein nach festgelegten Algorithmen automatisch eingestelltes Höhenniveau etwa ein geschwindigkeitsabhängiges sein, bei dem der Algorithmus bzw. der Funktionsrechner bei schneller Autobahnfahrt ein evtl. vorher durch den Fahrer eingestelltes hohes und für unwegsamen Untergrund geeignetes "Geländeniveau" des Fahrzeuges automatisch abgesenkt, um bei hohen Geschwindigkeiten eine größere Fahrstabilität zu erhalten. In ähnlicher Form können solche Sollwerte bei einer Lenkungssteuerung bestimmte Lenkwinkel oder Spureinstellungen repräsentieren oder bei einer Wankregelung bestimmte Winkel, Torsionsmomente oder Federkräfte für die vertikale Schrägstellung von Achsen.

Üblicherweise werden solche Sollwerte / Sollwertvorgaben in den Speichereinheiten der Steuerungseinrichtung in einer geeigneten und angepassten Form abgespeichert. Dies kann entweder in einem "flüchtigen" Speicher geschehen, etwa in einem RAM (RAM = Random Access Memory), oder in einem festen Speicher, einem ROM, hier etwa in einem EEPROM (EEPROM = Electrically Erasable Programmable Read Only Memory). Der flüchtige Speicher weist hierbei den Nachteil auf, dass er nur bei vorhandener Spannungsversorgung seinen Speicherinhalt behält und bei Spannungsausfall seinen Speicherinhalt verliert. Der große Vorteil liegt bei einem flüchtigen Speicher wie einem RAM darin, dass er sich beliebig oft mit neuen Daten beschreiben läßt. Der EEPROM ist dagegen ein elektrisch löschbarer Speicher und behält seinen Speicherinhalt auch bei Stromausfall. Hier besteht allerdings der Nachteil, dass die Anzahl der Schreib- bzw. Löschzyklen je nach Ausführungsform begrenzt sind. Grundsätzlich ist zwar als fester Speicher auch ein EPROM (EPROM = Erasable Programmable Read Only Memory), möglich, jedoch ist dieser nur mit UV-Licht und mit Hilfe spezieller Programmiergeräte löschbar und beschreibbar und in seinen Schreib- bzw. Löschzyklen noch weiter beschränkt. ROM und EPROM Typen müssen auch bereits bei der Herstellung beschrieben werden und können nicht mehr von den üblicherweise in einem Fahrzeugsteuergerät vorhandenen Kontrollern geändert werden.

Im allgemeinen werden daherfür die unterschiedlichen Aufgaben in einem Steuergerät RAM und EEPROM Typen von Speichern verwendet. Es sind natürlich auch andere Speichermethoden und -typen denkbar.

Aufgrund der Beschränkung in den Schreib- bzw. Löschzyklen werden in den meisten Steuergeräten für Fahrzeuge, die ja eine Nutzungsdauer von über zehn Jahren haben, die Sollwerte, die sich sehr oft und auch kurzfristig ändern, in unbegrenzt beschreibbaren Speichern, also z.B. in flüchtigen RAM Speichern abgelegt. Dies weist, wie gesagt, den Nachteil auf, dass die Speicherwerte bei einem Stromausfall verloren gehen, also etwa bei einem Abklemmen der Batterie während einer Wartung, oder auch bei Korrosion oder Abriss von Stromversorgungskabeln.

Der im Programmspeicher der Steuerungseinrichtung gespeicherte Algorithmus kann also in solchen Fällen nach der Wiederherstellung oder dem Wiedereinschalten der Stromversorgung für die Ablaufsteuerung auf die Sollwerte, die den beim Ausfall der Spannung vorhandenen Fahrzeugzustand repräsentierten, nicht mehr zurückgreifen. Üblicherweise greift dann der Algorithmus auf andere Sollwerte zurück, die in nicht flüchtigen Speichern abgelegt sind. So wird es z. B. im Fall einer Stromunterbrechung durch Wartungsarbeiten dann bei Wiederherstellung der Spannungsversorgung zu einer Reaktion der Stellglieder kommen, welche für das beteiligte Wartungspersonal zumindest sehr unerwartet eintreten kann.

Die US 5,078,421 offenbart ein Fahrwerkskontrollsystem mit einem Testprogramm zur Überprüfung der verstellbaren Dämpfung eines Fahrwerks. Dabei wird mit Hilfe einer Drucksteuereinrichtung ein Testdruck bzw. eine Druckdifferenz erzeugt, die dazu führt, dass der Druck in den hydraulisch arbeitenden Dämpfern ein anderer ist als der, der aufgrund der Detektierung des Straßenzustands eingestellt würde. Mit der Druckdifferenz werden dann die Dämpfer in den Fahrwerksaufhängungen der Vorderachse, der Hinterachse oder einer Seite beaufschlagt, sodass sich ein Nicken oder ein Wanken des Fahrzeuges ergibt. Bei einem Fehler in z.B. in einem Druckventil würde sich eine vom Fahrer bemerkbare zusätzliche Bewegung addieren, die zu einem Rollen des Fahrzeuges führen würde. Der augenblicklich Straßenzustand oder Fahrzeugszustand wird dabei durch Sensoren für die laterale und longitudinale Beschleunigung und für den Lenkwinkeleinschlag ermittelt. Unter anderem wird bei einem Wiedereinschalten der Stromzufuhr das gesamte System zunächst in einen Standby-Modus geschaltet, bei dem die mechanischen Elemente nicht mit Energie versorgt werden. Eine besondere Bedeutung dieser anfänglichen Ruhestellung der mechanischen Elemente im Hinblick auf das Verhindern von unerwünschten oder für Wartungspersonal gefährlichen Reaktionen von Stellelementen ist hier nicht offenbart.

Die DE 100 09 770 A1 offenbart eine elektronische Steuervorrichtung für ein Kraftfahrzeug und ein Datensicherungsverfahren hierfür. Dabei sind der Steuervorrichtung eine Energiespeichereinrichtung und eine Erfassungseinrichtung für den Ausfall der normalen Energieversorgung zugeordnet. Bei einer Unterbrechung der Energieversorgung werden dann Daten, die nicht verloren gehen sollen, aus dem Arbeitsspeicher in einen nichtflüchtigen Speicher geschrieben. Eine Abschaltung von mechanischen Elementen im Hinblick auf das Verhindern von unerwünschten oder für Wartungspersonal gefährlichen Reaktionen von Stellelementen ist hier ebenfalls nicht offenbart.

Die US 6,015,155 zeigt ein Fahrwerkssystem für ein Kraftfahrzeug, bei dem ein Signal zur Höheneinstellung der Fahrwerke einer Achse oder auch eines einzelnen Fahrwerkes dann ausgelöst wird, wenn beispielsweise über die Detektierung einer hohen Differenzdrehzahl darauf geschlossen werden kann, dass das Fahrzeug aufgesetzt hat und ein oder mehrere Räder mit erhöhter Drehzahl "leer" drehen. Um solche Reaktionen jedoch z. b. beim anheben des Fahrzeug auf einer Hebebühne zu vermeiden, wird auch geprüft, ob das Fahrzeug vor dem Aufsetzen überhaupt fuhr, ob also vorher Drehzahlsignale vorlagen. Eine Regelung für den Zustand nach Stromunterbrechung ist nicht bekannt gemacht.

Die DE 40 14 561 A1 offenbart ein Regelsystem für Kraftfahrzeuge, bei dem ein als "Zustandsbeobachter" bezeichneter Algorithmus eine wechselweisen Datenaustausch zwischen elektronischen Schaltkreisen, Sensoren und Steuerungseinrichtung ermöglicht und so eine Funktionsverbesserung durch eine damit ermöglichte Berechnung von Fahrzeugkonstanten ermöglicht, die dann wiederum als Ausgangs- oder Anfangsgrößen der Regelung zugrunde gelegt werden. Auch hier ist eine Regelung für den Zustand nach einer Stromunterbrechung nicht offenbart.

Für die Erfindung bestand also die Aufgabe, ein Verfahren zum Betreiben einer Steuerungseinrichtung eines Fahrzeuges bereitzustellen, bei dem eine für beteiligte Personen überraschende Reaktion oder Aktivierung der Stellglieder einer Fahrzeugsteuerung nach einer Unterbrechung der Spannungsversorgung ausgeschlossen wird. Gelöst wird diese Aufgabe durch die Merkmale des Hauptanspruchs. Weitergehende vorteilhafte Ausbildungen sind in den Unteransprüchen enthalten. Ebenfalls ist eine besondere Verwendung des Verfahrens offenbart.

Hierbei erfolgt nach einer Unterbrechung und einer nachfolgenden Wiederaufnahme der Spannungsversorgung der Steuerungseinrichtung die Ansteuerung der Stellglieder durch die Steuerungseinrichtung oder die Stellglieder selbst deaktiviert wird und nach der Deaktivierung der Steuerungseinrichtung oder der Stellglieder die neuerliche Aktivierung der Stellglieder durch die Steuerungseinrichtung erst dann, wenn an einer entsprechenden Schnittstelle der Steuerungseinrichtung ein eindeutiges und die Fahrbereitschaft des Fahrzeuges repräsentierendes Signal anliegt, wobei die neuerliche Aktivierung der Stellglieder durch die Steuerungseinrichtung so durchgeführt wird, das ein vordefinierter Fahrzeugzustand erreicht wird und unter im Funktionsrechner erfolgender Verarbeitung eines vorgegebenen und in einem festen Speicher hinterlegten Sollwertes erfolgt. Hierdurch wird eine sofortige Aktivierung der Stellglieder nach Wiederherstellung der Stromzufuhr verhindert und dadurch auch mit Sicherheit unerwartete Situationen für etwa beteiligtes Wartungspersonal.

Vorteilhafterweise werden die den Fahrzeugzustand repräsentierenden Zustandsgrößen aus der folgenden Gruppe der Zustandsgrößen bereitgestellt:
a) eine als Signal vorhandene und vom Fahrer ausgewählte Sollwertvorgabe, welche nach Verarbeitung in der Recheneinheit eine Aktivierung vorhandener Stellglieder durch die Steuerungseinrichtung auslöst, oder
b) eine als Signal vorhandene eine nach im Programmspeicher festgelegten Algorithmen automatisch eingestellte Sollwertvorgabe, welche nach Verarbeitung im Funktionsrechner eine Aktivierung vorhandener Stellglieder durch die Steuerungseinrichtung auslöst,
c) eine Zustandsgröße, die den aktuellen Zustand einer Ablaufsteuerung kennzeichnet.
Hiermit sind in jedem Fall die Zustandsgrößen in flüchtigen Speichern vorhanden, die einer hohen Anzahl von Schreib- bzw. Löschzyklen unterliegen. Ebenso sind damit die Zustandsgrößen ausreichend erfasst, und die in aller Regel einen merkbaren Abstand zur "Nullstellung" oder Mittellage der Fahrzeugzustände haben und damit eine Aktivierung der Stellglieder nach Wiederherstellung der Stromversorgung erzeugen können. Dies gilt auch für die Auswahl einer eine Zustandsgröße, die den aktuellen Zustand einer Ablaufsteuerung kennzeichnet. Dieser aktuelle Zustand kann auch durch Signale, Fahrervorgaben oder Messgrößen entstehen.

Dadurch, dass nach einer Unterbrechung und einer nachfolgenden Wiederaufnahme der Spannungsversorgung der Steuerungseinrichtung und damit der Deaktivierung der Steuerungseinrichtung oder der Stellglieder die neuerliche Aktivierung der Stellglieder durch die Steuerungseinrichtung erst dann erfolgt, wenn an einer entsprechenden Schnittstelle der Steuerungseinrichtung ein eindeutiges und die Fahrbereitschaft des Fahrzeuges repräsentierendes Signal anliegt, wird deutlich feststellbar, wann der Wartungszustand beendet ist und eine Aktivierung der Stellelemente nicht mehr als überraschend empfunden wird.

Dadurch, dass die neuerliche Aktivierung der Stellglieder durch die Steuerungseinrichtung so durchgeführt wird, das ein vordefinierter Fahrzeugzustand erreicht wird, kann man zusätzlich eine Einstellung wählen, bei der der Stellweg der Stellelemente optimiert, beispielweise im Mittel minimiert wird.

Eine weitere vorteilhafte Ausbildung besteht darin, dass die neuerliche Aktivierung der Stellglieder durch die Steuerungseinrichtung unter im Funktionsrechner erfolgender Verarbeitung eines vorgegebenen und in einem festen Speicher hinterlegten Sollwertes erfolgt. Ein solcher Sollwert wird dann so festgelegt, dass er eine "Nullstellung" oder Mittellage der Fahrzeugzustände beschreibt und über die Stellglieder auch auslöst. Ein solcher Sollwert kann natürlich auch den Ausgangszustand einer Steuerung repräsentieren, wenn in der Recheneinheit ein Steueralgorithmus implementiert ist.

Eine weitere vorteilhafte Ausbildung besteht darin, dass eine Unterbrechung der Spannungsversorgung der Steuerungseinrichtung durch eine durch den Funktionsrechner erfolgende Überprüfung der Speicherinhalte der flüchtigen Speicher erfolgt. Dies ist eine schnelle interne und einfache Kontrolle im Steuergerät und benötigt keine weiter Verarbeitung externer Signale. Eine besonders geschickte Variante ist hierbei die Überprüfung der Speicherinhalte der flüchtigen Speicher durch eine Mustererkennung bzw. durch einen Vergleich von Belegungsmustern der flüchtigen Speicher.

Eine weitere vorteilhafte Ausbildung besteht darin, dass nach einer Unterbrechung und einer nachfolgenden Wiederaufnahme der Spannungsversorgung der Steuerungseinrichtung und damit der Deaktivierung der Steuerungseinrichtung oder der Stellglieder die neuerliche Aktivierung der Stellglieder durch die Steuerungseinrichtung oder der Stellglieder erst dann erfolgt, wenn an einer entsprechenden Schnittstelle der Steuerungseinrichtung ein die Fahrzeuggeschwindigkeit repräsentierendes Signal anliegt. Hierdurch ist sichergestellt, dass das Fahrzeug sich bereits wieder in Fahrt befindet und somit nicht mehr im Wartungszustand ist. Sinnvoll unterstützt werden kann diese Ausbildung durch das Signal der Motordrehzahl, wie in Anspruch 9 beschrieben.

Eine weitere vorteilhafte Ausbildung besteht darin, dass nach einer Unterbrechung und einer nachfolgenden Wiederaufnahme der Spannungsversorgung der Steuerungseinrichtung und damit der Deaktivierung der Steuerungseinrichtung oder der Stellglieder die neuerliche Aktivierung der Stellglieder durch die Steuerungseinrichtung oder der Stellglieder erst dann erfolgt, wenn an einer Diagnoseschnittstelle der Steuerungseinrichtung bzw. an einer für externe Datenverarbeitungsgeräte zugänglichen Schnittstelle der Steuerungseinrichtung ein die Fahrbereitschaft des Fahrzeuges repräsentierendes Signal anliegt. Dadurch ist z. B. bei einer Wartung das Wartungspersonal in der Lage, selbst zu bestimmen, wann die Aktivierung der Stellelemente wieder einsetzt.

In besonders vorteilhafter Weise kommt dass erfindungsgemäße Verfahren innerhalb einer mit einer Steuerungseinrichtung versehenen Niveauregelanlage für Kraftfahrzeuge zur Anwendung, insbesondere innerhalb einer Niveauregelanlage eines luftgefederten Kraftfahrzeuges, wobei die vom Fahrer ausgewählten Sollwertvorgaben und die nach im Programmspeicher festgelegten Algorithmen automatisch eingestellten Sollwertvorgaben Höhen bzw. Niveaulagen des Fahrzeuges repräsentieren, und wobei als Stellglieder im wesentlichen Stellelemente gesteuert werden, die den Abstand zwischen Karosserie und Radachse verändern. Bei einer solchen Niveauregelanlage ist die Aktivierung von Stellgliedern nämlich mit erheblichen Bewegungen bzw. Wegänderungen verbunden, sodass hier die unerwartete Situation für z.B. Wartungspersonal besonders ausgeprägt sein kann.

Ein besonders geeignetes Mittel zur Durchführung des Verfahrens besteht in einer Schaltungsanordnung, bei der innerhalb der Steuerungseinrichtung eine hardwaremäßige Realisierung zur Erkennung einer Unterbrechung der Spannungsversorgung in der Steuerungseinrichtung implementiert ist. Hier sind unterschiedliche Schaltungstopologien denkbar, z. B. solche, die Entladungsvorgänge von Kondensatoren nutzen. Damit ist die gewünschte Funktion der Erkennung eines Spannungsausfalls als festes Bauteil und mit der entsprechenden absoluten Funktionssicherheit vorhanden.

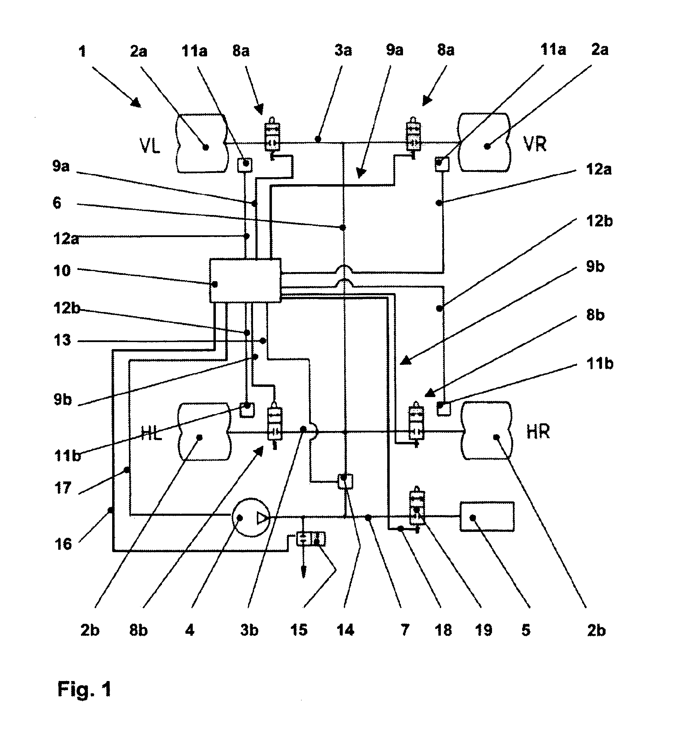

Anhand eines Ausführungsbeispiels bei Anwendung des Verfahrens in einer Steuerungseinrichtung einer Niveauregelanlage soll die Erfindung näher erläutert werden. Die Figur 1 zeigt schematisch eine Niveauregelanlage 1 für einen hier nicht näher dargestellten PKW. Die Niveauregelanlage verfügt an jedem Rad - hier ebenfalls nicht näher dargestellt - über Luftfedern, nämlich an der Vorderachse über die Luftfedern 2a, und an der Hinterachse über die Luftfedern 2b (VL steht für Vorn Links, VR für Vorn Rechts, HL für Hinten Links, und HR für Hinten Rechts).

Beide Luftfedern 2a und beide Luftfedern 2b sind jeweils über Luftleitungen 3a und 3 b miteinander verbunden, die Luftleitungen 3a und 3b sind wiederum untereinander und auch mit dem Kompressor 4 und dem Speicher 5 verbunden durch die Luftleitungen 6 und 7.

Jeder Luftfeder zugeordnet sind elektrisch schaltbare und ansteuerbare Sperrventile 8a und 8b, die über elektrische Steuerleitungen 9a und 9b mit der Steuerungseinrichtung 10 verbunden sind.

Die Niveauregelanlage weist weiterhin für jedes Rad bzw. jeden Radträger Höhensensoren auf, nämlich an der Vorderachse die Höhensensoren 11a und an der Hinterachse die Höhensensoren 11b, die über elektrische Signalleitungen 12a und 12b wiederum mit der Steuerungseinrichtung 10 verbunden sind.

Eine Signalleitung 13 verbindet einen - hier in der Druckleitung 6 befindlichen - Drucksensor 14 mit der Steuerungseinheit 10. Ein schalbares und steuerbares Auslaßventil 15 befindet ist der Luftleitung 7 zugeordnet und über eine weitere Steuerleitung 16 mit der Steuerungseinheit 10 verbunden. Letztlich verbindet eine weitere Steuerleitung 17 den Kompressor 4 und eine Steuerleitung 18 ein Speichersperrventil 19 mit der Steuerungseinheit 10.

Wird nun beispielsweise vom Fahrer ein Höhenniveau ausgewählt, dann wird dieses realisiert über die Steuerungseinheit 10, nämlich u.a. durch Ansteuern und Aktivieren des Kompressors 4 oder des Ablassventil 15, dies jeweils im Zusammenwirken mit dem Speicher 5 und den Luftfedern 2a und 2b als Stellgliedern und den zugehörigen Ventilen 8a, 8b und 19. Die Sollwertvorgaben hierzu kommen dann vom Fahrer und werden mit den Signalen der Höhensensoren 11a und 11b verglichen und die Aktivierung der Stellglieder entsprechend angesteuert.

Bei einer Unterbrechung der Spannungsversorgung bleiben die Stellglieder zunächst in der Höhenlage, die vor der Unterbrechung eingeregelt war und in diesem Fall dem Fahrerhöhenwunsch entsprach. Bei einer Wiederaufnahme der Spannungsversorgung der Steuerungseinrichtung wird nun die Ansteuerung der Stellglieder durch die Steuerungseinrichtung oder die Stellglieder selbst deaktiviert, sodass die eingeregelte Höhenlage solange erhalten bleibt, bis an einer entsprechenden Schnittstelle der Steuerungseinrichtung ein eindeutiges und die Fahrbereitschaft des Fahrzeuges repräsentierendes Signal anliegt. Damit werden plötzliche und unerwartete Stellbewegungen der Stellglieder verhindert.

### Bezugszeichenliste

### (Teil der Beschreibung)

- 1: Niveaurelanlage
- 2a, 2b: Luftfeder
- 3a, 3b: Luftleitungen
- 4: Kompressor
- 5: Speicher
- 6: Luftleitung
- 7: Luftleitung
- 8a,8b: Sperrventile
- 9a,9b: Steuerleitungen
- 10: Steuerungseinrichtung
- 11a,11b: Höhensensoren
- 12a,12b: elekrische Signalleitungen
- 13: Signalleitung
- 14: Drucksensor
- 15: Auslaßventil
- 16: Steuerleitung
- 17: Steuerleitung
- 18: Steuerleitung
- 19: Speichersperrventil

## Patentansprüche

1. Verfahren zum Betreiben einer Steuerungseinrichtung (10) eines Fahrzeuges oder eines Fahrzeugsystems, insbesondere einer Steuerungseinrichtung für Fahrwerkskomponenten, wobei die Steuerungseinrichtung im wesentlichen besteht aus mindestens einer Recheneinheit, aus mindestens einem zugehörigen Programmspeicher für die Algorithmen der Ablaufsteuerung, aus einem oder mehreren Datenspeichern zur Speicherung einstellbarer Parameter bzw. Parameterfelder für die Ablaufsteuerung, zur Speicherung von Signaldaten und Parametern von Sensoren, Sollwertgebern, sowie zur Speicherung von Signaldaten aus Datenleitungen (CAN), sowie aus zugehörigen Schnittstellen für Ein- und Ausgangssignale der Peripherie und der angesteuerten Bauelemente, wobei alle oder Teile der den Fahrzeugzustand repräsentierenden Zustandsgrößen in Form von Parametern oder Signaldaten als Speicherwerte in einem oder mehreren flüchtigen Speichern der Steuerungseinrichtung abgelegt werden, **dadurch gekennzeichnet, dass** nach einer Unterbrechung und einer nachfolgenden Wiederaufnahme der Spannungsversorgung der Steuerungseinrichtung die Ansteuerung der Stellglieder (2a, 2b) durch die Steuerungseinrichtung oder die Stellglieder selbst deaktiviert wird und nach der Deaktivierung der Steuerungseinrichtung oder der Stellglieder die neuerliche Aktivierung der Stellglieder durch die Steuerungseinrichtung erst dann erfolgt, wenn an einer entsprechenden Schnittstelle der Steuerungseinrichtung ein eindeutiges und die Fahrbereitschaft des Fahrzeuges repräsentierendes Signal anliegt, wobei die neuerliche Aktivierung der Stellglieder durch die Steuerungseinrichtung so durchgeführt wird, das ein vordefinierter Fahrzeugzustand erreicht wird und unter im Funktionsrechner erfolgender Verarbeitung eines vorgegebenen und in einem festen Speicher hinterlegten Sollwertes erfolgt.

2. Verfahren nach Anspruch 1, **dadurch gekennzeichnet, dass** die den Fahrzeugzustand repräsentierenden Zustandsgrößen aus der folgenden Gruppe der Zustandsgrößen bereitgestellt werden:
a) eine als Signal vorhandene und vom Fahrer ausgewählte Sollwertvorgabe, welche nach Verarbeitung in der Recheneinheit eine Aktivierung vorhandener Stellglieder durch die Steuerungseinrichtung auslöst, oder
b) eine als Signal vorhandene eine nach im Programmspeicher festgelegten Algorithmen automatisch eingestellte Sollwertvorgabe, welche nach Verarbeitung im Funktionsrechner eine Aktivierung vorhandener Stellglieder durch die Steuerungseinrichtung auslöst.
c) eine Zustandsgröße, die den aktuellen Zustand einer Ablaufsteuerung kennzeichnet.

3. Verfahren nach Anspruch 1 oder 2, **dadurch gekennzeichnet, dass** eine Unterbrechung der Spannungsversorgung der Steuerungseinrichtung durch eine durch den Funktionsrechner erfolgende Überprüfung der Speicherinhalte der flüchtigen Speicher erkannt wird.

4. Verfahren nach Anspruch 1 bis 3, **dadurch gekennzeichnet, dass** die Überprüfung der Speicherinhalte der flüchtigen Speicher durch eine Mustererkennung bzw. durch einen Vergleich von Belegungsmustern der flüchtigen Speicher erfolgt.

5. Verfahren nach Anspruch 1 bis 4, **dadurch gekennzeichnet, dass** nach einer Unterbrechung und einer nachfolgenden Wiederaufnahme der Spannungsversorgung der Steuerungseinrichtung und damit der Deaktivierung der Steuerungseinrichtung oder der Stellglieder die neuerliche Aktivierung der Stellglieder durch die Steuerungseinrichtung oder der Stellglieder erst dann erfolgt, wenn an einer entsprechenden Schnittstelle der Steuerungseinrichtung ein die Fahrzeuggeschwindigkeit repräsentierendes Signal anliegt.

6. Verfahren nach Anspruch 1 bis 5, **dadurch gekennzeichnet, dass** nach einer Unterbrechung und einer nachfolgenden Wiederaufnahme der Spannungsversorgung der Steuerungseinrichtung und damit der Deaktivierung der Steuerungseinrichtung oder der Stellglieder die neuerliche Aktivierung der Stellglieder durch die Steuerungseinrichtung oder der Stellglieder erst dann erfolgt, wenn an einer entsprechenden Schnittstelle der Steuerungseinrichtung ein die Motordrehzahl repräsentierendes Signal anliegt.

7. Verfahren nach Anspruch 1 bis 6, **dadurch gekennzeichnet, dass** nach einer Unterbrechung und einer nachfolgenden Wiederaufnahme der Spannungsversorgung der Steuerungseinrichtung und damit der Deaktivierung der Steuerungseinrichtung oder der Stellglieder die neuerliche Aktivierung der Stellglieder durch die Steuerungseinrichtung oder der Stellglieder erst dann erfolgt, wenn an einer Diagnoseschnittstelle der Steuerungseinrichtung bzw. an einer für externe Datenverarbeitungsgeräte zugänglichen Schnittstelle der Steuerungseinrichtung ein die Fahrbereitschaft des Fahrzeuges repräsentierendes Signal anliegt.

8. Verwendung des Verfahren nach Anspruch 1 bis 7 innerhalb einer Niveauregelanlage eines luftgefederten Kraftfahrzeuges, wobei die vom Fahrer ausgewählten Sollwertvorgaben und die nach im Programmspeicher festgelegten Algorithmen automatisch eingestellten Sollwertvorgaben Höhen bzw. Niveaulagen des Fahrzeuges repräsentieren, und wobei als Stellglieder im wesentlichen Stellelemente gesteuert werden, die den Abstand zwischen Karosserie und Radachse verändern.

9. Schaltungsanordnung zur Durchführung des Verfahrens nach Anspruch 1 bis 8, bei der innerhalb der Steuerungseinrichtung eine hardwaremäßige Realisierung zur Erkennung einer Unterbrechung der Spannungsversorgung der Steuerungseinrichtung implementiert ist.

## Claims

1. Method for operating a control device (10) of a vehicle or of a vehicle system, in particular a control device for chassis components, wherein the control device is composed essentially of at least one computing unit, of at least one associated program memory for the algorithms of the sequencing controller, of one or more data memories for storing adjustable parameters or parameter fields for the sequencing controller, for storing signal data and parameters of sensors, setpoint value transmitters, and for storing signal data from data lines (CAN), as well as of associated interfaces for input signals and output signals of the peripherals and of the actuated components, wherein all or some of the state variables which represent the state of the vehicle and which are in the form of parameters or signal data are stored as memory values in one or more volatile memories of the control device, **characterized in that,** after interruption and subsequent resumption of the voltage supply of the control device, the actuation of the actuator elements (2a, 2b) by the control device is deactivated or the actuator elements themselves are deactivated, and after the deactivation of the control device or of the actuator elements, the re-activation of the actuator elements by the control device does not take place until a clearly defined signal which represents the readiness of the vehicle to drive is present at a corresponding interface of the control device, wherein the re-activation of the actuator elements by the control device is carried out in such a way that a predefined state of the vehicle is reached and takes place by processing, in the function computer, of a predefined setpoint value which is stored in a non-volatile memory.

2. Method according to Claim 1, **characterized in that** the state variables which represent the state of the vehicle are made available from the following group of state variables:
a) a predefined setpoint value which is present as a signal, is selected by the driver and which, after processing in the computing unit, triggers activation of actuator elements which are present by the control device, or
b) a predefined setpoint value which is present as a signal, is set automatically according to algorithms which are specified in the program memory and, after processing in the function computer, triggers activation of actuator elements which are present by the control device, and
c) a state variable which characterizes the current state of a sequencing controller.

3. Method according to Claim 1 or 2, **characterized in that** an interruption in the voltage supply of the control device is detected by checking of the memory contents of the volatile memories which is carried out by the function computer.

4. Method according to Claims 1 to 3, **characterized in that** the checking of the memory contents of the volatile memories is carried out by pattern detection or by comparing assignment patterns of the volatile memories.

5. Method according to Claims 1 to 4, **characterized in that,** after interruption and subsequent resumption of the voltage supply of the control device and therefore the deactivation of the control device or of the actuator elements, the re-activation of the actuator elements by the control device or of the actuator elements does not take place until a signal which represents the velocity of the vehicle is present at a corresponding interface of the control device.

6. Method according to Claims 1 to 5, **characterized in that,** after interruption and subsequent resumption of the voltage supply of the control device and therefore the deactivation of the control device or of the actuator elements, the re-activation of the actuator elements by the control device or of the actuator elements does not take place until a signal which represents the engine speed is present at a corresponding interface of the control device.

7. Method according to Claims 1 to 6, **characterized in that,** after interruption and subsequent resumption of the voltage supply of the control device and therefore the deactivation of the control device or of the actuator elements, the re-activation of the actuator elements by the control device or of the actuator elements does not take place until a signal which represents the readiness of the vehicle to drive is present at a diagnostic interface of the control device or at an interface of the control device which is accessible to external data processing devices.

8. Use of the method according to Claims 1 to 7 within a ride level control system of a motor vehicle with a pneumatic suspension, wherein the predefined setpoint values which are selected by the driver and the predefined setpoint values which are set automatically according to algorithms specified in the program memory represent ride levels of the vehicle, and wherein essentially actuator elements which change the distance between the vehicle body and the wheel axle are controlled as actuator elements.

9. Circuit arrangement for carrying out the method according to Claims 1 to 8, in which the means for detecting an interruption in the voltage supply of the control device are implemented by means of hardware within the control device.

## Revendications

1. Procédé de fonctionnement d'un dispositif de commande (10) d'un véhicule ou d'un système de véhicule, notamment un dispositif de commande pour les composants du mécanisme de roulement, le dispositif de commande se composant pour l'essentiel d'au moins une unité de calcul, d'au moins une mémoire de programme associée pour les algorithmes de commande d'exécution, d'une ou plusieurs mémoires de données pour enregistrer des paramètres réglables ou des tableaux de paramètres pour la commande d'exécution, pour enregistrer des données de signal et des paramètres de capteurs et de codeurs de valeurs de consigne ainsi que pour enregistrer des données de signal provenant de lignes de données (CAN) ainsi que d'interfaces correspondantes pour les signaux d'entrée et de sortie de la périphérie et des composants commandés, la totalité ou une partie des grandeurs d'état qui représentent l'état du véhicule étant stockées sous la forme de valeurs enregistrées dans une ou plusieurs mémoires volatiles du dispositif de commande sous forme de paramètres ou de données de signal, **caractérisé en ce qu'**après une interruption suivie d'un rétablissement de l'alimentation électrique du dispositif de commande, la commande des actionneurs (2a, 2b) est désactivée par le dispositif de commande ou par les actionneurs eux-mêmes et après la désactivation du dispositif de commande ou des actionneurs, la réactivation des actionneurs par le dispositif de commande n'a lieu que lorsqu'un signal explicite représentant l'état prêt à rouler du véhicule est présent sur une interface correspondante du dispositif de commande, la réactivation des actionneurs par le dispositif de commande étant réalisée de telle sorte qu'un état prédéfini du véhicule est atteint et s'effectue dans le cadre du traitement effectué dans l'ordinateur de fonctionnement d'une valeur de consigne prédéfinie et stockée dans une mémoire fixe.

2. Procédé selon la revendication 1, **caractérisé en ce que** les grandeurs d'état qui représentent l'état du véhicule sont fournies à partir du groupe suivant de grandeurs d'état :
a) une indication de consigne présente sous la forme d'un signal et sélectionnée par le conducteur, laquelle déclenche une activation des actionneurs présents par le dispositif de commande après son traitement dans l'unité de calcul, ou
b) une indication de consigne réglée automatiquement d'après des algorithmes définis dans la mémoire de programme et présente sous la forme d'un signal, laquelle déclenche une activation des actionneurs présents par le dispositif de commande après son traitement dans l'ordinateur de fonctionnement,
c) une grandeur d'état qui caractérise l'état actuel d'une commande d'exécution.

3. Procédé selon la revendication 1 ou 2, **caractérisé en ce qu'**une interruption de l'alimentation électrique du dispositif de commande est détectée par un contrôle du contenu de la mémoire volatile effectué par l'ordinateur de fonctionnement.

4. Procédé selon les revendications 1 à 3, **caractérisé en ce que** le contrôle du contenu de la mémoire volatile est réalisé par une reconnaissance de modèle ou par une comparaison de modèles d'occupation de la mémoire volatile.

5. Procédé selon les revendications 1 à 4, **caractérisé en ce qu'**après une interruption suivie d'un rétablissement de l'alimentation électrique du dispositif de commande et ainsi la désactivation du dispositif de commande ou des actionneurs, la réactivation des actionneurs par le dispositif de commande ou des actionneurs n'a lieu que lorsqu'un signal représentant la vitesse du véhicule est présent sur une interface correspondante du dispositif de commande.

6. Procédé selon les revendications 1 à 5, **caractérisé en ce qu'**après une interruption suivie d'un rétablissement de l'alimentation électrique du dispositif de commande et ainsi la désactivation du dispositif de commande ou des actionneurs, la réactivation des actionneurs par le dispositif de commande ou des actionneurs n'a lieu que lorsqu'un signal représentant la vitesse de rotation du moteur est présent sur une interface correspondante du dispositif de commande.

7. Procédé selon les revendications 1 à 6, **caractérisé en ce qu'**après une interruption suivie d'un rétablissement de l'alimentation électrique du dispositif de commande et ainsi la désactivation du dispositif de commande ou des actionneurs, la réactivation des actionneurs par le dispositif de commande ou des actionneurs n'a lieu que lorsqu'un signal représentant l'état prêt à rouler du véhicule est présent sur une interface de diagnostic du dispositif de commande ou sur une interface du dispositif de commande accessible à des appareils de traitement externes.

8. Application d'un procédé selon les revendications 1 à 7 dans un équipement de régulation de niveau d'un véhicule automobile à suspension pneumatique, les indications de consigne sélectionnées par le conducteur et les indications de consigne réglées automatiquement d'après les algorithmes définis dans la mémoire de programme représentant des hauteurs ou des niveaux du véhicule, et les actionneurs commandés étant pour l'essentiel des éléments de positionnement qui modifient l'écart entre la carrosserie et l'essieu.

9. Arrangement de circuit pour réaliser le procédé selon les revendications 1 à 8, avec lequel une réalisation matérielle est mise en oeuvre à l'intérieur du dispositif de commande pour détecter une interruption de l'alimentation électrique du dispositif de commande.
